(19) Europäisches Patentamt
European Patent Office
Office européen des brevets

(11) **EP 4 000 938 A1**

(12) **EUROPÄISCHE PATENTANMELDUNG**

(43) Veröffentlichungstag:
25.05.2022  Patentblatt 2022/21

(21) Anmeldenummer: 21212468.9

(22) Anmeldetag: 02.04.2019

(51) Internationale Patentklassifikation (IPC):
*B41J 11/00* (2006.01)       *B41F 23/04* (2006.01)
*B41M 7/00* (2006.01)        *B05D 3/06* (2006.01)
*G02B 19/00* (2006.01)       *G02B 5/00* (2006.01)
*B05D 1/26* (2006.01)

(52) Gemeinsame Patentklassifikation (CPC):
**B41J 11/00214; B41J 11/00218; G02B 5/005;
G02B 19/0014; G02B 19/0061; G02B 19/0095;**
B05D 1/26; B05D 3/067

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(62) Dokumentnummer(n) der früheren Anmeldung(en)
nach Art. 76 EPÜ:
**19166754.2 / 3 718 777**

(71) Anmelder: Heidelberger Druckmaschinen AG
69115 Heidelberg (DE)

(72) Erfinder:
• **Hachmann, Dr. Peter**
  **69469 Weinheim-Hohensachsen (DE)**
• **Korkut Punckt, Dr. Sibel**
  **76297 Stutensee (DE)**
• **Hauptmann, Dr. Gerald**
  **69245 Bammental (DE)**

Bemerkungen:
Diese Anmeldung ist am 06.12.2021 als
Teilanmeldung zu der unter INID-Code 62 erwähnten
Anmeldung eingereicht worden.

(54) **VORRICHTUNG ZUM HÄRTEN VON UV-TINTE AUF EINEM BEDRUCKSTOFF**

(57)    Die Erfindung betrifft eine Vorrichtung zum Härten von UV-Tinte auf einem Bedruckstoff, umfassend eine Mehrzahl M1 von Strahlern (12), welche als UV-LED-Strahlungsquellen ausgebildet sind. Die Vorrichtung umfasst eine Mehrzahl M2 von optischen Elementen (15), welche derart ausgebildet und angeordnet sind, dass der jeweilige maximale Abstrahlwinkel $\alpha_{max}$ der Strahler auf $\alpha_{max} \leqq 30\,°$ begrenzt wird, dass die Strahler (12) im Wesentlichen in einer ersten Ebene (11) angeordnet sind, dass die optischen Elemente (15) im Wesentlichen in einer zur ersten Ebene (11) parallelen, zweiten Ebene (14) angeordnet sind und dass die optischen Elemente (15) als Spiegel (31) ausgebildet sind und in der zweiten Ebene (14) ein Spiegel-Array bilden. Die Erfindung ermöglicht es in vorteilhafter Weise, unerwünschte Mattierungseffekte zu reduzieren oder gar zu verhindern.

Fig.3

EP 4 000 938 A1

**Beschreibung**

Die Erfindung betrifft eine Vorrichtung zum Härten von UV-Tinte auf einem Bedruckstoff mit den Merkmalen von Anspruch 1.

Technisches Gebiet und Stand der Technik

Die Erfindung liegt auf dem technischen Gebiet der grafischen Industrie und dort insbesondere im Bereich des industriellen, d.h. hochproduktiven Tintendrucks (Inkjet) auf flache Substrate, d.h. des Auftragens und Trocknens oder Härtens von flüssiger Tinte auf bogen- oder bahnförmige Bedruckstoffe, bevorzugt aus Papier, Karton, Pappe, Kunststoff oder Verbundmaterial.

Das Auftragen flüssiger Tinte erfolgt bei dem bekannten DOD-Tintendruckverfahren (drop-on-demand), indem ein Druckbild auf einem flachen Bedruckstoff erzeugt wird, wobei ein Tintendruckkopf (kurz: Kopf) mit einzeln ansteuerbaren Düsen dem zu druckenden Bild entsprechend feinste Tintentropfen, bevorzugt im Pikoliter-Bereich, erzeugt und diese berührungslos als Druckpunkte auf den Bedruckstoff überträgt. Das Ansteuern der Düsen kann mittels Piezoaktoren erfolgen.

Das Härten von Druckfluiden (allgemeiner: Beschichtungsfluiden) auf Substraten, insbesondere von polymerisierbaren Druckfarben, Lacken oder Tinten auf Papier, Karton oder Kunststofffolie, kann durch ein Beaufschlagen des aufgebrachten Fluids mit elektromagnetischer Strahlung erzielt werden, insbesondere durch Ultraviolett- bzw. UV-Strahlung. Dabei wird das Fluid bzw. wenigstens dessen polymerisierbare Anteile polymerisiert.

Zur Verbesserung der Trocknungsleistung der eingesetzten Trockner und insbesondere zur Fokussierung der abgegebenen Strahlung ist es bereits bekannt, die Trockner mit Linsen zu bestücken.

Die WO 03/096387 A2 offenbart ein LED-Curing-System u.a. zur Photopolymerisation von Tinten mit Mikrolinsen zur Ausrichtung der Strahlung auf einen Öffnungswinkel kleiner 5°. Die JP 2012-096377 (A) offenbart ein ähnliches System.

Bei den bekannten Systemen können Probleme auftreten, z.B. im Weiteren beschriebenen Mattierungeffekte.

Beim Trocknen von UV-Tinte mit UV-Strahlung wurde folgendes Problem erkannt: Wird das Zwischenhärten der UV-Tinte bzw. das sogenannte Pinnen, mit einer zu geringen Leistung durchgeführt, so ist das Pinnen nicht ausreichend und die Tinte bzw. die Tintentropfen zerfließen nach dem Pinnen in unerwünschter Weise. Wird dagegen mit höherer Leistung gepinnt, so kann ein unerwünschtes Mattieren der Tinte auftreten. Durch das Mattieren nehmen der Glanz und damit auch die Qualität des Druckproduktes ab. Weiterhin kann das Problem auftreten, dass beim Pinnen mit zu hoher Leistung zu viel Streulicht auf Düsenflächen benachbarter Druckköpfe gelangt und dort zu einem Anhärten von Tinte führt, so dass die Druckköpfe öfter gereinigt werden müssen oder im Extremfall ausfallen. Zudem kann das Problem auftreten, dass beim Drucken von ausgedehnten Weiß-Vollflächen und bei deren Pinnen eine Faltenbildung hervorgerufen wird, welche auf das starke Erwärmen des Bedruckstoffs beim Pinnen von in Weiß-Vollflächen üblichen dicken Tintenschichten zurückzuführen ist.

Aufgabe

Es ist daher eine Aufgabe der Erfindung, eine gegenüber dem Stand der Technik verbesserte Vorrichtung zu schaffen, welche es insbesondere ermöglicht, unerwünschte, weil störende Mattierungseffekte beim Härten (Vorhärten bzw. Pinnen und/oder Enthärten) von UV-härtbaren flüssigen Medien, insbesondere UV-Tinten, bevorzugt von schwarzen Tinten, zu verringern oder gar zu vermeiden.

Erfindungsgemäße Lösung

Diese Aufgabe wird erfindungsgemäß durch eine Vorrichtung mit der Merkmalskombination von Anspruch 1 gelöst. Vorteilhafte und daher bevorzugte Weiterbildungen der Erfindung ergeben sich aus den Unteransprüchen sowie aus der Beschreibung und den Zeichnungen. Die Merkmale der Erfindung, der Weiterbildungen der Erfindung und der Ausgangsbeispiele zur Erfindung stellen auch in Kombination miteinander vorteilhafte Weiterbildungen der Erfindung dar.

"Bedruckstoff" meint im Rahmen dieser Anmeldung flache Substrate, welche unbedruckt und für das Bedrucken vorgesehen sind oder bereits bedruckt und für das weitere Bedrucken oder weitere Verarbeiten, insbesondere Falzen, vorgesehen sind. "Bedruckstoff" meint insbesondere flache Substrate in Form von Bogen oder Bahnen im Wesentlichen aus den Materialien Papier, Karton, Pappe, Wellpappe, Kunststoff oder Metall, insbesondere Kunststofffolie oder Metallfolie, oder in Form von Etiketten im Wesentlichen aus den Materialien Papier oder Kunststoff, insbesondere auf einer Träger-Bahn, oder in Form von Bahnen im Wesentlichen aus den Materialien Naturfaser oder Kunstfaser, insbesondere Textil-Bahnen wie z.B. Gewebe-Bahnen. Der Bedruckstoff wird bevorzugt für den Akzidenz-, Etiketten- und/oder Verpackungsdruck verwendet.

Die Erfindung betrifft eine Vorrichtung zum Härten von UV-Tinte auf einem Bedruckstoff, umfassend eine Mehrzahl M1 von Strahlern, welche als UV-LED-Strahlungsquellen ausgebildet sind, und zeichnet sich dadurch aus, dass die Vorrichtung eine Mehrzahl M2 von optischen Elementen umfasst, welche derart ausgebildet und angeordnet sind, dass der jeweilige maximale Abstrahlwinkel $\alpha_{max}$ der Strahler auf $\alpha_{max} \leqq 30\,°$ begrenzt wird, dass die Strahler im Wesentlichen in einer ersten Ebene angeordnet sind, dass die optischen Elemente im Wesentlichen in einer zur ersten Ebene parallelen, zweiten Ebene angeordnet sind und dass die optischen Elemente als Spiegel ausgebildet sind und in der zweiten Ebene ein Spiegel-Array bilden.

Die Erfindung ermöglicht es in vorteilhafter Weise, störende Mattierungseffekte zu verringern oder gar zu vermeiden.

Die erfindungsgemäße Vorrichtung bzw. deren Nutzung verhindert, dass Strahlen mit einem Winkel $\alpha$ (gegen das Lot) von mehr als 30 ° auf den Bedruckstoff bzw. die aufgedruckte Tinte gelangen. Solche Strahlen würden nicht "tief" in die Tintenschicht eindringen und daher an deren Oberfläche eine Art "Haut" bilden. In umfangreichen Untersuchungen wurde erkannt, dass gerade eine solche Hautbildung zumindest mit verantwortlich (wenn nicht ursächlich) für die störende Mattierung ist.

Es treffen somit bevorzugt nur Strahlen in einem Winkelbereich zwischen 0° und 30° und zwischen 0° und -30° (gemessen gegen eine Senkrechte auf dem Bedruckstoff) auf den Bedruckstoff, auch wenn der Strahler Strahlen erzeugt, welche unter größeren Winkeln abgestrahlt werden. Letztere gelangen nicht oder nur unter verändertem, auf 30° begrenztem Winkel auf den Bedruckstoff. Der maximale Abstrahlwinkel $\alpha_{max}$ der Strahler kann somit als der maximale Winkel aufgefasst werden, unter dem Strahlen auf den Bedruckstoff auftreffen.

Mit der erfindungsgemäßen Lösung gelingt es jedoch in vorteilhafter Weise, lediglich diejenigen Strahlen zu nutzen, welche ausreichend tief in die Tintenschicht eindringen, keine störende "Haut" an der Oberfläche der zu härtenden Tinte zu erzeugen und somit störende Mattierungseffekte zu reduzieren oder gar zu verhindern.

Neben dem Vorteil, eine störende Mattierung zu reduzieren oder gar zu verhindern, ergibt sich auch der zusätzliche Vorteil, dass weniger Streulicht erzeugt wird und daher auch weniger Verunreinigungen oder Beschädigungen der benachbarten Druckköpfe zu erwarten sind. Hieraus ergibt sich der ebenfalls zusätzliche Vorteil, dass Trockner zum Pinnen näher an den benachbarten Druckköpfen platziert werden können und infolgedessen Bauraum in der Druckmaschine eingespart werden kann.

Insgesamt ergibt sich als Vorteil der Erfindung auch eine Kostenreduktion bei gleichzeitiger Herstellung hochqualitativer Druckprodukte.

Weiterbildungen der Erfindung

Bevorzugte Weiterbildungen der Erfindung können sich durch eine oder mehrere (auch miteinander kombinierten) der nachfolgend aufgelisteten Merkmalskombinationen auszeichnen:
Die erste Ebene kann parallel zum zu behandelnden Bedruckstoff liegen.

Die Strahler können in der ersten Ebene benachbart zueinander angeordnet sein. Die Strahler können direkt benachbart zueinander angeordnet sein, d.h. ohne dazwischen befindliche weitere Komponenten. Die Strahler können auf einer Platine angeordnet sein. Die Strahler können eine (z.B. wechselbare) Einheit bilden.

Die zweite Ebene kann parallel zum zu behandelnden Bedruckstoff liegen. Die optischen Elemente können zwischen den Strahlern und dem Bedruckstoff angeordnet sein, insbesondere in Form von Lochblenden oder Linsen. Die Strahler können zwischen den optischen Elementen und dem Bedruckstoff angeordnet sein, insbesondere in Form von Spiegeln.

Jedem Strahler kann genau ein Spiegel zugeordnet sein.

Die Spiegel können als Ellipsoid-Spiegel (Hohlspiegel mit elliptischem Profil) ausgebildet sein.

Die Vorrichtung kann einen ersten Trockner zum Zwischenhärten der Tinte umfassen, wobei die Mehrzahl M1 von Strahlern und die Mehrzahl M2 von optischen Elementen dem ersten Trockner zugeordnet sind.

Die Vorrichtung kann einen, dem ersten Trockner in Bedruckstoff-Transportrichtung nachgeordneten, zweiten Trockner zum Enthärten der Tinte umfassen.

Es kann ein, der Mehrzahl M1 von Strahlern gegenüberstehender Spiegel vorhanden sein. Der Bedruckstoff kann zwischen der Ebene der Strahler und dem gegenüberliegenden Spiegel transportiert werden.

Es kann vorgesehen sein, dass eine Führungseinrichtung für den Bedruckstoff vorgesehen ist, z.B. eine Düsenfläche zum Ausstoßen von Blasluft, und dass die Führungseinrichtung verspiegelt ist und den Spiegel bildet

Figuren und Ausführungsbeispiele zur Erfindung

Die Erfindung und deren bevorzugte Weiterbildungen werden nachfolgend unter Bezug auf die Zeichnungen, das heißt die Figuren 1 bis 7, anhand bevorzugter Ausführungsbeispiele näher beschrieben. Einander entsprechende Merkmale sind dabei mit denselben Bezugszeichen versehen.

Die Figuren zeigen:

Figur 1:　　eine Schnittansicht einer Tinten-Druckmaschine;

Figur 2:　　einen Trockner mit einer erfindungsgemäßen Vorrichtung;

Figur 3:　　eine Ausführungsform mit Spiegeln

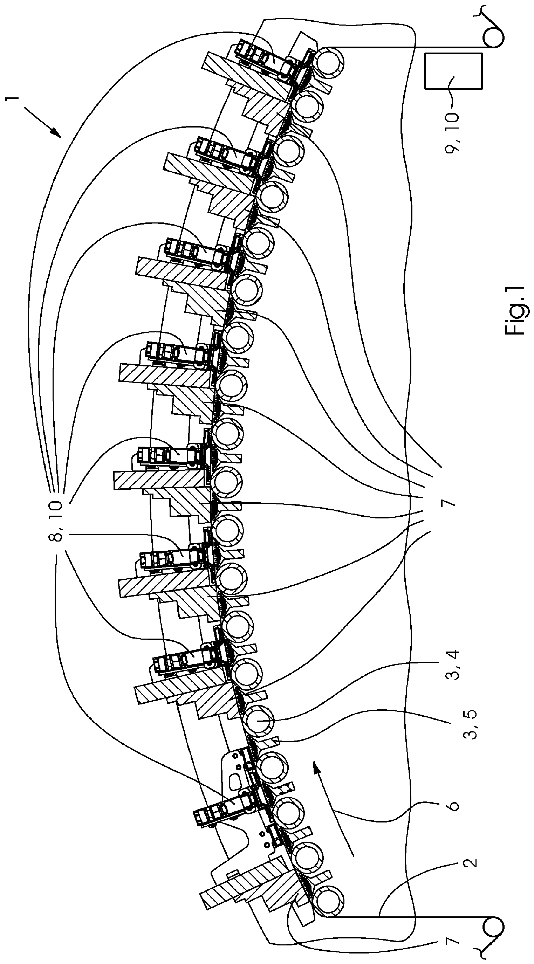

Figur 1 zeigt eine Schnittansicht einer Tinten-Druckmaschine 1 mit mehreren erfindungsgemäßen Vorrichtungen zum Härten, insbesondere zum Zwischenhärten bzw. Pinnen, von UV-Tinte.

Die Figur 1 zeigt eine bahnverarbeitende Tintendruckmaschine für die industrielle Produktion mehrfarbiger Druckprodukte im Inkjet-Druckverfahren bei vorgegebener Druckauflösung, z.B. 1.200 x 1.200 dpi, und Verarbeitungsgeschwindigkeit, z.B. 50 Meter pro Minute. Die Maschine umfasst einen Rollen-Abwickler, ein Inkjet-Druckwerk für das bildgemäße Bedrucken der Bahn oder der Etiketten und einen Rollen-Aufwickler. Die Maschine kann auch zusätzliche Flexowerke umfassen, z.B. vor dem Druckwerk zum Auftragen von Primer oder Flexofarbe oder nach dem Druckwerk zum Lackieren. Weiterhin kann die Maschine Nachbearbeitungswerke zum Laminieren, Kaltfolienveredeln, Ausstanzen oder Entgittern umfassen. Die Bahn kann aus Papier, Kunststoff- oder Metallfolie bestehen. Das Druckwerk umfasst acht in Bogen-Transportrichtung aufeinander folgend angeordnete Druckstationen zum Übertragen von Tintentropfen, bevorzugt der Farben Weiß und KCMYOGV (Schwarz, Cyan, Magenta, Gelb, Orange, Grün und Violett). Jede Station umfasst eine im Wesentlichen quer zur Transportrichtung ausgerichtete Anordnung von im Druckbetrieb unbewegten Druckköpfen mit je einer Vielzahl an einzeln ansteuerbaren Druckdüsen zum Erzeugen der Tropfen ("Drop on demand" bzw. DOD). Die Stationen ermöglichen das seitenbreite Bedrucken einer Bahnseite im so genannten single-pass-Betrieb, d.h. die Bahnseite gelangt nur einmal in den Wirkbereich der Stationen. Die Tinten sind UV-härtende Tinten, deren Tropfen auf der Bahn bestrahlt werden, um Druckpunkte hoher Punktschärfe zu bilden, und enthalten als Farbmittel Farbstoffe. Eine UV-Einrichtung zum Endhärten umfasst bevorzugt LED-Strahler und dient dem Polymerisieren und somit dem Härten der Tinte. Die Maschine kann auch UV-Module zwischen den Druckstationen zum Pinnen der Tinten umfassen. Die Maschine umfasst auch eine Maschinensteuerung mit einem Rechner und einem auf dem Rechner laufenden Steuerprogramm, wobei der Rechner Teil eines nicht dargestellten Bedienpults sein kann. Ebenfalls nicht dargestellt sind eine Einrichtung zur Versorgung der Druckstationen mit Tinten und eine Einrichtung zur Reinigung der Druckköpfe.

Die Tintendruckmaschine 1 verarbeitet Bedruckstoff 2, insbesondere eine Bedruckstoffbahn, z.B. aus Papier oder Kunststofffolie, und kann der Herstellung von Etiketten dienen. Der Bedruckstoff 2 wird entlang einer Transportstrecke 3 geführt, insbesondere von Transportrollen 4 und vorzugsweise gekühlten und optional verspiegelten Führungsflächen 5. Der Transport erfolgt in eine Transportrichtung 6, welche insbesondere gekrümmt sein kann.

Entlang der Transportstrecke 3 sind mehrere Tinten-Druckwerke 7 angeordnet. Beispielhaft drucken diese die Farben Weiß, Cyan, Magenta, Yellow (Gelb), Schwarz, Grün, Orange und Violett. Die Druckgeschwindigkeit bzw. die Geschwindigkeit, mit der der Bedruckstoff durch die Maschine gefördert wird, kann im Bereich zwischen 10 und 150 Metern pro Minute relativ zu den Druckköpfen liegen.

Jedem Tinten-Druckkopf 7 ist in Transportrichtung 6 ein Trockner 8, insbesondere ein sogenannter Zwischentrockner, bzw. ein Trockner zum Pinnen, bevorzugt direkt nachgeordnet. Die Tinten unterschiedlicher Farben werden von diesen Trocknern bevorzugt direkt nach dem Auftragen jeweils gepinnt, d.h. nur teilweise gehärtet. Das Endhärten aller Tinten erfolgt abschließend mit einem weiteren Trockner 9, dem sogenannten Endtrockner. Dieser Endtrockner kann ein UV- oder Elektronenstrahl-Trockner sein.

Die Trockner 8 und 9, bevorzugt nur die Trockner 8, umfassen oder bilden jeweils eine erfindungsgemäße Vorrichtung 10 zum Härten von UV-Tinte auf dem Bedruckstoff 2.

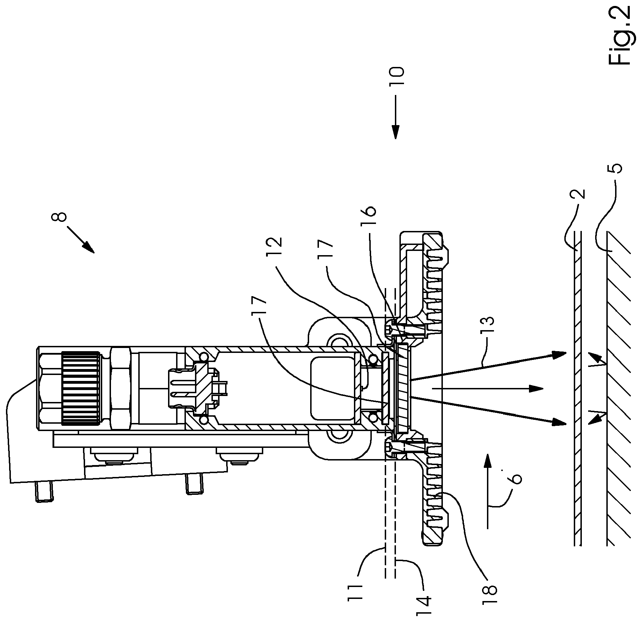

Figur 2 zeigt eine Schnittansicht eines Trockners 8, welcher eine erfindungsgemäße Vorrichtung 10 umfasst.

In einer ersten Ebene 11 sind mehrere Strahler 12 angeordnet, insbesondere eine Mehrzahl M1. In der Figur 2 ist nur ein Strahler erkennbar, da diese im Wesentlichen in einer Richtung senkrecht zur Papierebene benachbart zueinander angeordnet sind. Die Strahler sind jeweils bevorzugt als UV-LED-Strahlungsquellen ausgebildet und emittieren Strahlung 13, bevorzugt UV-Strahlung, in Richtung zur Oberfläche des Bedruckstoffs 2. Die Wellenlänge der Strahlung kann im Bereich zwischen 300 und 400 Nanometer liegen. Die Leistung der LEDs liegt bevorzugt zwischen 200 und 100.000 mW/cm$^2$.

Die LEDs sind bevorzugt derart nebeneinander (in einer Reihe quer zur Transportrichtung des Bedruckstoffs 2) als LED-Chips auf einer Leiterplatte angeordnet, dass deren jeweilige Strahlung zum Teil überlappt. Hierdurch wird die Zuverlässigkeit (bezüglich eines LED-Ausfalls) und die Homogenität der Anordnung bzw. deren Strahlung verbessert.

Für den Zusammenhang zwischen der Anzahl n überlappender LED-Bestrahlungsbereiche, dem gegenseitigen Abstand d der LED-Chips auf der Leiterplatte, dem Abstand h zwischen den virtuellen Punktquellen der LEDs und der Substratoberfläche, dem maximal erlaubten Strahlungswinkel θ gilt die folgende Beziehung:

$$\frac{h}{d} = n / \left(2 * \tan\left(\frac{\theta}{2}\right)\right)$$ . Dabei wurde die Länge des Überlappbereiches zwischen der ersten und der n-ten LED gleich d gesetzt, was einen nahtlosen Anschluss der Überlappungsbereiche ermöglicht.

Je nach Vorgabe bestimmter gewünschter Parameter kann die Wahl der noch offenen Parameter bzw. die Anordnung entsprechend den Vorgaben angepasst werden. Möchte man die Länge des Überlapp-Bereiches vorgeben, so kann in der obigen Beziehung z.B. der Parameter d (oder ein anderer Parameter) mit einer entsprechenden geometrischen Beziehung durch den Parameter Überlapplänge ersetzt werden.

Beispiel:
Für eine festgelegte gewünschte Anzahl von überlappenden LEDs (n), einen gewünschten maximal erlaubten Strahlungswinkel (θ) und einen gegebenen Abstand zwischen einzelnen LEDs (d), wird der zugehörige Abstand zwischen den virtuellen Punktquellen und der Substratoberfläche (h) entsprechend der oben genannten Beziehung festgelegt.

Abhängigkeit von h von d, n und θ ist:

$$\frac{h}{d} = n/\left(2\tan\left(\frac{\theta}{2}\right)\right).$$

In einer zweiten Ebene 14 sind mehrere optische Elemente 15 angeordnet, insbesondere eine Mehrzahl M2. Diese sind in den folgenden Figuren im Detail dargestellt und können bevorzugt Lochblenden, Linsen oder Spiegel, insbesondere in sogenannter Array-Anordnung sein.

Die Vorrichtung 10 kann weiterhin bevorzugt einen (z.B. wechselbaren) Rahmen 16, eine (optionale) Glasplatte 17 zum Verhindern von Verschmutzungen dahinter befindlicher Teile und Lichtfallen 18 für die Strahlung 13 umfassen.

Der Trockner 8 kann eine weitere Glasplatte 17 direkt vor den Strahlern 12 umfassen.

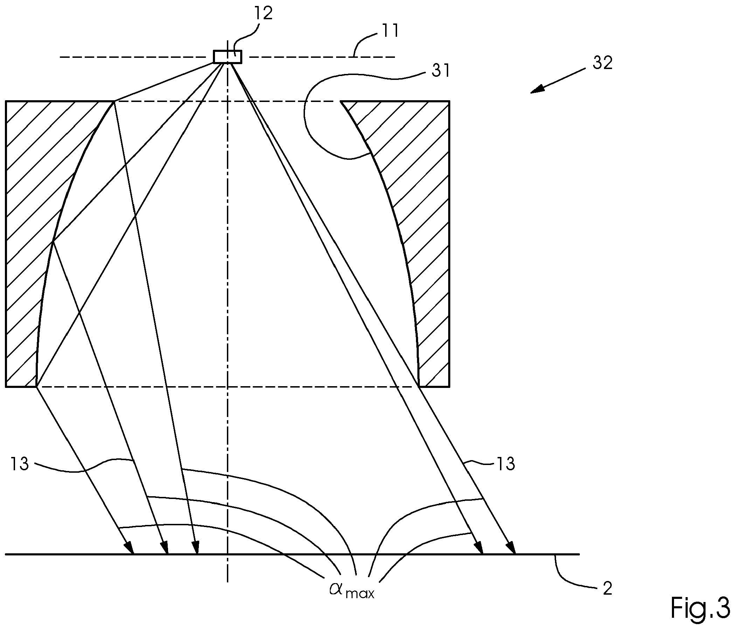

Figur 3 zeigt schematisch eine Ausführungsform mit Spiegeln.

Bei dieser Ausführungsform ist jedem Strahler 12 der Ebene 11 genau ein Spiegel 31, bevorzugt ein Ellipsoid-Spiegel, zugeordnet. Der Spiegel ist dabei so geformt, dass alle direkte Strahlung 13 und alle gespiegelte Strahlung mit einem Winkel $\alpha \leqq \alpha_{max} \leqq 30\,°$ auf den Bedruckstoff 2 trifft. Alle an der Innenwand (des Spiegels) reflektierten Strahlen 13 haben einen Winkel $\alpha$ (gegen das Lot gemessen) < 30 °. Benachbarte Spiegel 31 bilden bevorzugt ein Spiegel-Array 32.

Die Innenwand des Lochs ist glatt und verspiegelt und stellt einen Ausschnitt aus einem Ellipsoid dar.

Das Loch ist einer bestimmten LED zugeordnet die sich im einen Brennpunkt des Ellipsoids befindet.

Sowohl die geometrischen Parameter des Ellipsoids als auch der für die Innenwand verwendete Ausschnitt des Ellipsoids sind so zu wählen, dass der gewünschte maximale Einfallwinkel gegen LED-Lot für direkte und reflektierte Strahlung auf dem Substrat nicht überschritten wird.

Die auf das Substrat treffenden reflektierten Strahlen haben beim Ellipsoid verschiedene Auftreffwinkel kleiner als 30°.

Die Wahl des Abstandes zwischen Lichtquelle und Array-Oberseite (und der damit sich ergebende obere Loch-Innendurchmesser legt den maximalen Strahlwinkel gegen LED-Lot fest, der gerade noch ausgerichtet wird. Alle Strahlen mit größerem Strahlwinkel treffen auf die Oberseite des Arrays außerhalb des der Lichtquelle zugeordneten Lochs. Je nach Abstrahlcharakteristik der Lichtquelle kann dies für einen mehr oder weniger großen Winkelbereich in Kauf genommen werden.

Die Wahl des Abstandes zwischen Lichtquelle und Array-Unterseite legt den minimalen Strahlwinkel gegen LED-Lot fest, der gerade noch ausgerichtet wird. Alle Strahlen mit kleinerem Strahlwinkel treffen direkt auf das Substrat (im Beispiel 30°).

Fertigung des Loch-Arrays mit Ellipsoid-Form: Herstellung (mikromechanisch) von ellipsoidförmigen Master-Formen zum Bohren/Schleifen/Polieren der Löcher. Wird in eine Metallplatte gebohrt/geschliffen/poliert, so erübrigt sich evtl. eine nachgelagerte Verspiegelung durch Aufsputtern oder Aufdampfen einer Metallschicht.

Das Loch-Array kann auch durch Spritzgießen in einer Master-Form erzeugt werden.

Zuordnung der Löcher zu den LEDs: Jedes Loch ist einer bestimmten LED zugeordnet die sich im einen Brennpunkt des Ellipsoids befindet.

Nachteilig an dieser Ausführungsform ist, dass die LEDs und die Spiegel sehr exakt zueinander angeordnet werden müssen. Es wird daher die oben beschriebene Ausführungsform mit Linsen gegenüber der Ausführungsform mit Spiegeln bevorzugt.

**Bezugszeichenliste**

| | |
|---|---|
| 1 | Tinten-Druckmaschine |
| 2 | Bedruckstoff, insbesondere Bahn |
| 3 | Transportstrecke |
| 4 | Transportrollen |
| 5 | Transportvorrichtung für den Bedruckstoff, gegebenenfalls verspiegelt |
| 6 | Transportrichtung des Bedruckstoffs |
| 7 | Tinten-Druckköpfe |
| 8 | Trockner, insbesondere Zwischentrockner |
| 9 | Trockner, insbesondere Endtrockner |
| 10 | erfindungsgemäße Vorrichtung |
| 11 | erste Ebene |
| 12 | Strahler bzw. UV-LED-Strahlungsquellen |
| 13 | Strahlung/Strahlen, insbesondere UV-Strahlung/Strahlen |
| 14 | zweite Ebene |
| 15 | optische Elemente |
| 16 | Rahmen |
| 17 | Glasplatten |
| 18 | Lichtfallen |
| 31 | Spiegel, insbesondere Ellipsoid-Spiegel |
| 32 | Spiegel-Array |
| $\alpha_{max}$ | maximaler Winkel |

**Patentansprüche**

1. Vorrichtung zum Härten von UV-Tinte auf einem Bedruckstoff, umfassend eine Mehrzahl M1 von Strahlern (12), welche als UV-LED-Strahlungsquellen ausgebildet sind,
**dadurch gekennzeichnet,**
**dass** die Vorrichtung eine Mehrzahl M2 von optischen Elementen (15) umfasst, welche derart ausgebildet und angeordnet sind, dass der jeweilige maximale Abstrahlwinkel $\alpha_{max}$ der Strahler auf $\alpha_{max} \leqq$ 30 ° begrenzt wird, dass die Strahler (12) im Wesentlichen in einer ersten Ebene (11) angeordnet sind, dass die optischen Elemente (15) im Wesentlichen in einer zur ersten Ebene (11) parallelen, zweiten Ebene (14) angeordnet sind und dass die optischen Elemente (15) als Spiegel (31) ausgebildet sind und in der zweiten Ebene (14) ein Spiegel-Array bilden.

2.  Vorrichtung nach Anspruch 1,
    **dadurch gekennzeichnet,**
    **dass** die Strahler (12) in der ersten Ebene (11) benachbart zueinander angeordnet sind.

3.  Vorrichtung nach Anspruch 1 oder 2,
    **dadurch gekennzeichnet,**
    **dass** die Spiegel (31) jeweils als Ellipsoid-Spiegel ausgebildet sind.

4.  Vorrichtung nach einem der vorhergehenden Ansprüche,
    **dadurch gekennzeichnet,**
    **dass** die Vorrichtung (10) einen ersten Trockner (8) zum Zwischenhärten der Tinte umfasst, wobei die Mehrzahl M1 von Strahlern (12) und die Mehrzahl (M2) von optischen Elementen (15) dem ersten Trockner (8) zugeordnet sind.

5.  Vorrichtung nach Anspruch 4,
    **dadurch gekennzeichnet,**
    **dass** die Vorrichtung (10) einen, dem ersten Trockner (8) in Bedruckstoff-Transportrichtung (6) nachgeordneten, zweiten Trockner (9) zum Härten der Tinte umfasst.

6.  Vorrichtung nach Anspruch 4,
    **dadurch gekennzeichnet,**
    **dass** ein, der Mehrzahl M1 von Strahlern (12) gegenüberstehender, Spiegel (5) vorhanden ist.

7.  Vorrichtung nach Anspruch 6,
    **dadurch gekennzeichnet,**
    **dass** eine Führungseinrichtung (5) für den Bedruckstoff (2) vorgesehen ist und dass die Führungseinrichtung verspiegelt ist und den Spiegel (5) bildet.

Fig.1

Fig.2

Fig.3

Europäisches
Patentamt

European
Patent Office

Office européen
des brevets

**EUROPÄISCHER RECHERCHENBERICHT**

Nummer der Anmeldung

EP 21 21 2468

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/014518 A1 (NK WORKS CO LTD [JP]; YAMAGUCHI TAKUJI [JP] ET AL.) 2. Februar 2012 (2012-02-02) * das ganze Dokument * ----- | 1-7 | INV. B41J11/00 B41F23/04 B41M7/00 B05D3/06 G02B19/00 G02B5/00 B05D1/26 |
| X | US 2019/011112 A1 (SHITO KAZUTAKA [JP]) 10. Januar 2019 (2019-01-10) * das ganze Dokument * ----- | 1-7 | |
| X | US 2014/014857 A1 (MARTINEZ AARON D [US] ET AL) 16. Januar 2014 (2014-01-16) | 1-5 | |
| Y | * Absatz [0003] – Absatz [0031]; Abbildungen 5,8,9 * ----- | 6,7 | |
| X | US 2017/009961 A1 (WERTZ JARED J [US] ET AL) 12. Januar 2017 (2017-01-12) * das ganze Dokument * ----- | 1-5 | |
| Y | US 2018/257398 A1 (STRASEMEIER JOHN ANDREW [US] ET AL) 13. September 2018 (2018-09-13) * Absatz [0079] – Absatz [0082]; Abbildung 8 * ----- | 6,7 | |
| A | EP 3 239 763 A1 (HOYA CANDEO OPTRONICS CORP [JP]) 1. November 2017 (2017-11-01) * Absatz [0013] * * Absatz [0020] – Absatz [0042] * ----- | 1 | RECHERCHIERTE SACHGEBIETE (IPC) B41J B41L B41M B41F C23D B05D G02B |

Der vorliegende Recherchenbericht wurde für alle Patentansprüche erstellt

| Recherchenort | Abschlußdatum der Recherche | Prüfer |
|---|---|---|
| Den Haag | 14. April 2022 | Curt, Denis |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 2468

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2022

| Im Recherchenbericht angeführtes Patentdokument | Datum der Veröffentlichung | Mitglied(er) der Patentfamilie | Datum der Veröffentlichung |
|---|---|---|---|
| WO 2012014518 A1 | 02-02-2012 | JP WO2012014518 A1 | 12-09-2013 |
| | | WO 2012014518 A1 | 02-02-2012 |
| US 2019011112 A1 | 10-01-2019 | CN 109203667 A | 15-01-2019 |
| | | JP 6910226 B2 | 28-07-2021 |
| | | JP 2019014165 A | 31-01-2019 |
| | | KR 20190005738 A | 16-01-2019 |
| | | TW 201917025 A | 01-05-2019 |
| | | US 2019011112 A1 | 10-01-2019 |
| US 2014014857 A1 | 16-01-2014 | CA 2771764 A1 | 17-03-2011 |
| | | CN 102574149 A | 11-07-2012 |
| | | EP 2470309 A2 | 04-07-2012 |
| | | JP 5714586 B2 | 07-05-2015 |
| | | JP 2013503448 A | 31-01-2013 |
| | | KR 20130056845 A | 30-05-2013 |
| | | US 2011049392 A1 | 03-03-2011 |
| | | US 2011128680 A1 | 02-06-2011 |
| | | US 2014014857 A1 | 16-01-2014 |
| | | WO 2011031526 A2 | 17-03-2011 |
| | | WO 2011031529 A2 | 17-03-2011 |
| US 2017009961 A1 | 12-01-2017 | US 2017009961 A1 | 12-01-2017 |
| | | WO 2017008042 A1 | 12-01-2017 |
| US 2018257398 A1 | 13-09-2018 | EP 3592314 A1 | 15-01-2020 |
| | | US 2018257398 A1 | 13-09-2018 |
| | | WO 2018164864 A1 | 13-09-2018 |
| EP 3239763 A1 | 01-11-2017 | CN 107364226 A | 21-11-2017 |
| | | EP 3239763 A1 | 01-11-2017 |
| | | JP 6465828 B2 | 06-02-2019 |
| | | JP 2017183554 A | 05-10-2017 |
| | | KR 20170113126 A | 12-10-2017 |
| | | TW 201737510 A | 16-10-2017 |
| | | US 2017282597 A1 | 05-10-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03096387 A2
- JP 2012096377 A